# EUROPÄISCHE PATENTANMELDUNG

(11) **EP 1 691 003 A2**
(43) Veröffentlichungstag der Anmeldung: **16.08.2006**
(21) Anmeldenummer: 05028778.8
(22) Anmeldetag: 30.12.2005
(51) Int. Cl.: E04F 15/02, E04F 13/08, F21V 33/00, F21Y 101/02, G02B 6/00

(54) **Lichtsystem mit Belagplatte und Lichtkörper**

(30) Priorität: 30.12.2004 DE 102004063780; 22.08.2005 DE 102005039781
(71) Anmelder: Pagenhardt, Lutz, 10407 Berlin (DE)
(72) Erfinder: Pagenhardt, Lutz, 10407 Berlin (DE)
(74) Vertreter: Baumbach, Friedrich

(57) **Zusammenfassung**

Die Erfindung betrifft ein Lichtsystem aus einer Belagplatte (1) mit einem Leuchtkörper (3). Anwendungsgebiete der Erfindung liegen im Bereich der Funktionalisierung von Wand- oder Bodenbelägen, vorzugsweise Kacheln, Fliesen, Naturstein, Pflaster- oder Betonstein/Betonelemente zur Herstellung von Flächen in Innen und/oder Außenbereichen, zum Beispiel auch Fassaden, mit einer oder mehreren Lichtquellen. Kernpunkt der Erfindung ist eine Leiterplatte (2), die an der Belagplatte fixiert ist, einen oder mehrere Leuchtkörper trägt und durch Leuchten des Leuchtkörpers oder der Leuchtkörper in unterschiedlichsten Charakterisitika Effekte oder Informationen übermittelbar macht. Die Charakteristika können beispielsweise sein: Leuchten der Leuchtkörper in zeitlichen Abfolgen, unterscheidlichen Farbe, Helligkeitszuständen und Adressierbarkeit der Leuchtpunkte (Leiterplatte)

## Beschreibung

Die Erfindung betrifft ein Lichtsystem aus einer Belagplatte mit mindestens einem Leuchtkörper. Anwendungsgebiete der Erfindung liegen im Bereich der Funktionalisierung von Wand- oder Bodenbelägen, vorzugsweise Kacheln oder Fliesen, zur Herstellung von Flächen mit einer oder mehreren Lichtquellen, insbesondere mit astatischem und/oder informativem Charakter. Ein Beispiel für die Verwendung der Erfindung liegt in der Ausgestaltung von Fahr- oder Gehwegen, in der ästhetischen Ausgestaltung von Flächen in Veranstaltungsräumen, Eingangsbereichen und/oder der ästhetischen oder informativen Ausgestaltung von Gebäudefassaden und Flächen im Wohnbereich.

Leuchtkörper mit einer elektrisch gespeisten Lichtquelle wie etwa Glühlampen, Leuchtdioden / SMD, organische Licht-emittierende Dioden (oLEDs), Metalldampflampen, Leuchtstoffröhren, Laser oder Gasentladungslampen bieten die Möglichkeit, elektrische Energie in Strahlung umzuwandeln.
Platten zur Belegung von Wänden oder Böden sind zumeist industriell gefertigte Bauelemente, die zur Herstellung, Stabilisierung, zum Schutz oder zur ästhetischen Verkleidung von baulich gefertigten oder natürlichen Oberflächen verwendet werden können. Weit verbreitet sind dabei insbesondere Kacheln oder Fliesen. Werden solche Belagplatten mit einer oder mehreren Leuchtkörpern kombiniert, bieten sie ganz allgemein die Möglichkeit, die Lichtquelle zu fixieren.

In der Praxis sind Systeme bekannt, bei denen mit Hilfe mechanischer Bearbeitung räumliche Aussparungen in die Belagplatte eingefügt werden, um dort einen Leuchtkörper zu befestigen oder um eine Verbindung mit einer von der Aussparung räumlich entfernten Lichtquelle zu schaffen. Aus der Druckschrift EP1469141 ist eine Kachel bekannt, die mit einer Aussparung versehen ist, in die ein Leuchtkörper eingebracht wird oder die mit einer solchen verbunden ist.
Aus dem Dokument DE10013496 ist weiterhin ein Prinzip bekannt, mit dessen Hilfe optisch durchlässige Einleger in Fußboden- oder Wandbelägen mit einer räumlich entfernten Lichtquelle verbunden sind.

Nachteilig an den bekannten Lichtsystemen ist jedoch, daß die mechanische Bearbeitung der Boden- oder Wandbeläge zu ihrer Herstellung zeitlich und werkzeugtechnisch aufwendig ist oder zumindestens ein fachmännisches Grundwissen für die Verkabelung vorausgesetzt werden muß. Aufgabe der vorliegenden Erfindung ist es daher, ein einfaches und kostengünstiges Lichtsystem anzugeben, das eine schnelle Montage und eine einfache Verkabelung ermöglicht, seine Verwendung, einen Bausatz, der die Bestandteile des Lichtsystems enthält, sowie ein einfaches Verfahren zur Funktionalisierung von Oberflächen mit einer oder mehreren Lichtkörpem. Diese Aufgabe wird durch die in den Ansprüchen beschriebenen Maßnahmen gelöst.

Nach einem Aspekt der Erfindung wird eine Belagplatte (1) auf einfache Weise mit einem Leuchtkörper kombiniert. Kernstück der Erfindung ist dabei eine Leiterplatte (2), die an der Belagplatte fixiert ist und die wenigstens einen Leuchtkörper (3) trägt.

Das Material, aus dem die in der Erfindung offenbarte Belagplatte gebildet ist, ist vorzugsweise natürlichen oder synthetischen Ursprungs, kann aber auch eine Kombination aus beiden darstellen. Die Belagplatte besteht dabei vorteilhafterweise aus nicht oder zumindestens nur geringfügig elektrisch leitenden Substanzen wie etwa Ton, Keramik, Glas, Holz, oder Stein, zum Beispiel als Marmor gebildet, die neben der natürlichen Verfügbarkeit und dem Preis oftmals eine einfache industrielle Fertigung und Verarbeitung der Belagplatte ermöglichen. Für die Erfindung besonders geeignete Belagplatten sind insbesondere Kacheln und Fliesen. Sind die Kacheln oder Fliesen zumindestens auf einer Seite mit einer wasserabweisenden Glasur bedeckt, besteht darüber hinaus der Vorteil, durch ihre Verlegung Wände oder Böden vor Feuchtigkeit zu schützen. Die Belagplatte kann auch aus einer Kombination unterschiedlicher natürlicher Materialien gebildet sein, wie z. B. Kunststein.
Für verschiendenste Anwendungen der Erfindung bieten sich auch Belagplatten an, die aus organisch-chemischen Werkstoffen gebildet sind, wobei die Werkstoffe insbesondere durch chemische Veränderung von Naturstoffen oder aus anorganischen und organischen Rohstoffen künstlich hergestellt sein können, wie beispielsweise Linoleum oder PVC. Da solche synthetischen Materialien oftmals vorteilhafte Eigenschaften wie Beständigkeit gegen Oxidation, Fäulnis, Witterungseinflüsse und Chemikalien aufweisen, bieten sich für unterschiedlichste Verwendungen der Erfindung auch Belagplatten an, die aus einer Kombination natürlicher und synthetischer Materialien gebildet sind, beispielsweise mit Kunstlack behandeltes Holz.
Die räumlichen Abmessungen der in der Erfindung offenbarten Belagplatte können dem individuellen Bedarf angepasst sein, vorteilhafterweise werden dabei flache beziehungsweise ebene Belagplatten verwendet. Neben dem Nutzen eines geringen Materialverbrauchs und einer einfachen Handhabung, kann die Verwendung von flachen oder ebenen Belagplatten darüber hinaus die Fixierung der in der vorliegenden Erfindung offenbarten Leiterplatte an die Belagplatte zumindestens erleichtern. Die Leiterplatte kann verschiedenartig ausgestaltet sein, vorzugsweise als eine ein- oder mehrschichtige Leiterplatte. Für eine einfache Herstellung des erfindungsgemäßen Lichtsystems bieten sich dabei insbesondere dünne Leiterplatten an, vorzugsweise solche mit einer Höhe von weniger als 3,5 mm. Die Leiterplatte kann über unterschiedlichste technische Eigenschaften verfügen, für die Erfindung besonders geeignet sind beispielsweise Leiterplatten in die wenigstens eine Zuführung für Elektroenergie oder Elektroenergie mit elektrischer information insbesondere in Form von elektrischen Leitern, integriert ist. Dies hat zudem den Vorteil, dass auch eine einfache Verbindung von einer oder mehreren Lichtsystemen an wenigstens einen elektrischen Stromkreis ermöglicht wird.

Die Fixierung der Leiterplatte an die Belagplatte kann auf verschiedenste Art und Weise erfolgen, anpassbar an das jeweils verwendete Material der Belagplatte und der Leiterpatte. Bevorzugt sind dabei insbesondere Verbindungen durch doppelseitig klebendes Bandmaterial, und/oder schlüssige Verbindungen die von einem ausgehärteten Material, beispielsweise Klebstoff, Komponenten- oder Baustoffkleber ausgebildet sind, aber auch andere Fixierungen, beispielsweise durch eine Verschraubung der Leiterplatte oder mechanische Klemmung an die Belagplatte / zwischen den Belagplatten sind geeignet.
Die Leiterplatte kann vorteilhafterweise unterhalb der Belagplatte fixiert sein, dass sie über den Rand/Naht/Kante der Belagplatte übersteht und/oder bündig mit der Kante der Belagplatte abschließt und/oder nicht bündig mit der Belagplatte abschließt sondern schon unterhalb der Belagplatte endet. Trägt die Leiterplatte mit der überstehenden Fläche wenigstens einen Leuchtkörper, hat dies den wesentlichen Vorteil, dass der Leuchtkörper auf einfache Weise seitlich von der Belagplatte fixiert ist. Dadurch wird auch eine besonders einfache Montage ermöglicht, insbesondere wenn der Leuchtkörper in dem Bereich befestigt ist, bei dem sich mehr als zwei Belagplatten in räumlicher Nähe befinden, zum Beispiel dem Fliesenkreuz bei vier Belagplatten oder in den Fugen zwischen mindestens zwei Belagplatten. Besonders günstig ist daneben auch eine Ausgestaltung, bei der mindestens eine, vorzugsweise durchgängige, Aussparung in der Belagplate gebildet ist, die sich oberhalb der fixierten Leiterplatte befindet. Die eine oder mehrere Aussparung(en) kann dabei je nach Bedarf auf unterschiedliche Weise gebildet sein, vorteilhaft ist dabei insbesondere eine Ausgestaltung als Bohrung in der bzw. durch die Belagplatte. Dabei ist die Aussparung (4) oberhalb der Leiterplatte vorgesehen oder wird in diese eingefügt, vorzugsweise derart, dass ein direkter Zugang zu Elementen der Leiterplatte, insbesondere Licht- und oder Elektroleitern sowie/oder den beschriebenen Leuchtkörper(n), gebildet ist. Vorteilhaft an dieser Weiterbildung der Erfindung ist insbesondere eine einfache Herstellung und Verwendung von Belagplatten, die über wenigstens eine sichtbare Lichtquelle innerhalb der Belagplatte verfügen.
Trägt die Leiterplatte den Leuchtkörper in dem Bereich der Aussparung, so wird in besonders praktische und einfache Fixierung des Leuchtkörpers ermöglicht und somit eine bevorzugte Herstellung des erfindungsgemäßen Lichtsystems. Darüber hinaus kann neben einer Fixierung der Leiterplatte an den Leuchtkörper bzw- Belagplatte auch der Leuchtkörper bereits montagetechnisch vor der Verlegung des Lichtsystems an die Leiterplatte fixiert beziehungsweise mit elektrisch leitenden Elementen der Leiterplatte kontaktiert sein, so dass eine besonders einfache Handhabung der offenbarten Erfindung und Verbindung mit benachbart angeordneten Lichtsystemen ermöglicht wird.
In einer vorteilhaften Weiterbildung der Erfindung sind dazu an dem über den Rand der Belagplatte vorstehende Bereich der Leiterplatte mindestens ein Leuchtkörper und/oder Anschlusskabel zum Anschluß an elektrische Leitungen vorgesehen.
Der innerhalb der erfindungsgemäßen Merkmalskombination offenbarte Leuchtkörper kann über verschiedenste technische Eigenschaften sowie Abmessungen verfügen, besonders geeignet sind insbesondere Leuchtkörper, die zumindestens in einer ihrer räumlichen Dimension nach der Fixierung auf der Leiterplatte nicht die Höhe der Belagplatte überschreiten, wodurch eine einfache Herstellung von Ebenen, die mit dem Lichtsystem ausgestaltet sind, ermöglicht wird. Der Leuchtkörper kann erfindungsgemäß mit unterschiedlichsten Lichtquellen ausgestattet sein, bevorzugt beinhaltet der Leuchtkörper dabei wenigstens eine Lichtquelle, die elektrisch gespeist wird. Auch bei einer einfachen elektrischen Speisung kann der oder die Leuchtkörper (z. B. Leuchtdioden) in der Helligkeit gesteuert werden.
Nach einer vorteilhaften Weiterbildung der Erfindung ist das Lichtsystem an ein elektrisches Bussystem angeschlossen oder steht mit diesem in Verbindung. Die Ausgestaltung des Bussystem kann dabei den unterschiedlichen Verwendungszwecken angepaßt sein. Das Bussystem ist in der Lage auf den elektrischen Bus-Leitungen (mind. Zweileiter System) einerseits die elektrische Energie für alle Systemkomponenten als auch die elektrischen Steuersignale für die Leiterplatten zu liefern, so dass der oder die Leuchtkörper (z. B. RGB - Leuchtdiode) über die betreffende Leiterplatte in Adressierbarkeit, Lichtfarbe und Lichtintensität ansteuerbar ist bzw. sind. Besonders geeignet für die Erfindung sind insbesondere 2-Draht-Bussysteme. Das erfindungsgemäße elektrische Bussystem hat unter anderem die vorteilhafte Eigenschaft, daß es eine besonders einfache Verlegung und überschaubare Verkabelung des Lichtsystems ermöglicht. Geeignet ist dabei insbesondere ein System mit zwei im Fugenbereich und/oder unterhalb der Belagplatte verlaufenden isoliert elektrisch leitenden Adern/Kabeln/Leitern, die über die Leiterplatte(n) als Träger für mindestens einen Leuchtkörper und/oder eine elektronische SMD (Surface Mounted Device)-Baugruppe oder -Chip mit Energie und/oder elektrischen/elektronischen Steuerungssignalen versorgt wird.

In einer anderen vorteilhaften Weiterbildung der Erfindung steht die Leiterplatte mit wenigstens einem oder mehreren Steuerelementen, oder/und mindestens einem insbesondere elektronischen Empfänger-Chip, in Verbindung.
Der Empfänger-Chip kann dabei unter anderem von außen an die Leiterplatte fixiert sein oder ist bereits in der Leiterplatte integriert. Der Empfänger-Chip kann aber auch benachbart zur Leiterplatte, z.B. unterhalb der Belagplatte, oder in räumlicher Entfernung, z.B. auf/unter einer anderen Leiterplatte bzw. Belagplatte angeordnet sein.
Das Steuerelement kann einfarbige Leuchtkörper (z. B. LED) auf Leiterplatten über mindestens ein Zweileiter- System in Helligkeit, zeitlicher Abfolge (z. B. Blinken) und Energie steuern.

Das Bus-System-Steuerelement steuert über mindestens ein Zweileitersystem RGB - Leuchtkörper (z. B. RGB-LED)/Leiterplatte(n) in Licht-Helligkeit, zeitlicher Abfolge, Licht-Farbe und Energie wobei jeder einzelne Leuchtkörper adressierbar ist.

Das Steuerelement hat die vorteilhafte Eigenschaft, daß das Lichtsystem für die verschiedendsten Anwendungsmöglichkeiten anpaßbar ist. Beispielsweise ermöglicht das Steuerelement die einfache Umsetzung äußerer, vorzugsweise elektrischer, Signale zur individuellen Steuerung des Lichtsystems.
Das Steuerelement ist mit elektrischer Energie versorgt, kann sich unterhalb der Belagfläche oder in räumlicher Entfernung zu der Belagfläche befinden und per Fernsteuerung (Funk-, Infrarot-) oder galvanisch / mit elektrischen Leitern angesteuert werden.

Die Steuerungssignale können dabei u.a. eine Adressierbarkeit der Leiterplatten/Leuchtkörper) durch einzelne oder gruppenweise Ansteuerung ermöglichen, und/oder eine Helligkeitssteuerung (z.B. bei einfarbig oder RGB- (Rot, Grün, Blau)-Leuchtkörpern oder Lichtemittierenden Dioden (LEDs)) und/oder eine Farbsteuerung/Leuchtfarben-Steuerung, insbesondere die Farbvorgabe / von möglichen RGB-Leuchtkörpern.

In einer besonders geeigneten Fortbildung der Erfindung ist der wenigstens eine Leuchtkörper als eine oder mehrere Leuchtdioden gebildet. Dies hat, im Vergleich zu herkömmlichen Leuchtkörpern wie beispielsweise Glühlampen, den Vorteil einer besonders langen Haltbarkeit des Leuchtkörpers sowie eines geringen Stromverbrauchs bei der Verwendung des erfindungsgemäßen Lichtsystems.

Günstig ist dabei insbesondere eine Lagerung wenigstens einer Leuchtdiode in einer Edeistahlhülse, die vorzugsweise mit der Leiterplatte in mechanischen und/oder elektrischen Kontakt steht oder mit dieser, insbesondere durch Kabel oder andere elektrische Leiter verbunden ist- Vorteilhaft, insbesondere bei Belagplatten und/oder Fugen, deren Höhe die Höhe des Leuchtkörpers ünter- bzw. überschreitet, ist die Verwendung einer SMD-Leuchtdiode in Kombination mit einem oderen mehreren Lichtleitern., wodurch eine besonders einfache Montage und/oder Festlegung der Lichtaustrittshöhe auch bei solchen Belagplatten und/oder Fugen gewährleistet wird, die die Höhe des Leuchtkörpers ünter- bzw. überschreiten. Allgemein kann die Verwendung von SMD-Leuchtdioden in Kombination mit einem oderen mehreren Lichtleitern je nach Bedarf auch bei anderen Ausgestaltungen der Belagplatten und/oder Fugen von Vorteil oder erforderlich sein
Ein besonders einfach umzusetzendes Lichtsystem sieht darüber hinaus vor, daß der Leuchtkörper bzw. die Leuchtdiode und/oder Lichleiter zusammen mit der Edelstahlhülse planarleben mit der Oberfläche der Belagplatte und/oder der Fuge abschließt.

Nach einer anderen vorteilhaften Weiterbildung der Erfindung ist die Belagplatte als eine Kachel oder Fliese ausgestaltet und die Leiterplatte derart an die Belagplatte fixiert, dass der über den Rand der Belagplatte überstehende Bereich der Leiterplatte nicht die übliche Breite von Fugen zwischen Kacheln oder Fliesen überschreitet. Dies hat den erfindungsgemäßen Vorteil einer besonders einfachen Handhabung bei der Verlegung sowie der einfachen elektrischen Verbindung des Lichtsystems, das mehr als eine Kachel oder Fliese beinhaltet, beispielsweise an einen elektrischen Stromkreis.
In einer weiteren besonders geeigneten Fortbildung der Erfindung sind die elektrischen Leitungen des Lichtsystems in den Fugen und oder unterhalb der Belagplatte(n) zwischen zwei Belagplatten geführt und vorzugsweise zumindestens teilweise in der oder den Leiterplatten integriert, wodurch eine besonders günstige Verlegung des Lichtsystems, beispielsweise nach dem sogenannten Dünnbettverfahren, gewährleistet ist.
In vorteilhafter Weiterbildung der Erfindung ist die Leiterplatte auf der dem Boden der Belagplatte zugewandten Seite mit mindestens einem Lichtleiter, z.B. Glasfaser, versehen, der vorzugsweise von dem in der erfindungsgemäßen Merkmalskombination vorgesehenen Leuchtkörper gespeist wird, wodurch die einfache Möglichkeit einer gezielten Zuführung von Licht unter die Belagplatte und/oder der lichtleitenden Verbindung zwischen mehr als einer Belagplatte gegeben ist. Darüber hinaus kann der Leuchtkörper auch mehrere der zumindestens teilweise mit den Leiterplatten geführten Lichtleiter speisen, wodurch eine Vervielfachung der ausgehenden Lichtsignale ermöglicht wird.
In einer besonders geeigneten Fortbildung der Erfindung ist die Belagplatte durchsichtig oder teilweise durchsichtig gebildet. Dies hat den erfindungsgemäßen Vorteil, dass das Licht von der vorzugsweise seitlich der Belagplatte angeordneten Lichtquelle direkt in die Belagplatte dringen kann, insbesondere wenn Lichtleiter ausgehend von dem Leuchtkörper unterhalb der zumindestens teilweise durchsichtigen Belagplatte geführt sind. Dadurch kann das Licht für den Betrachter als eine oder mehrere Lichtquellen oberhalb bzw. in der Belagplatte sichtbar werden, auch wenn der Leuchtkörper selbst für den Beobachter verborgen, beispielsweise in einer Fuge zwischen zwei Belagplatten, gelagert ist.
In einer anderen vorteilhaften Weiterbildung der Erfindung ist der Leuchtkörper durch mehrere Leuchtdioden gebildet. Dies hat den Vorteil, dass unterschiedlichste Lichteffekte oder Informationen durch das Lichtsystem vermittelbar sind, insbesondere wenn die Leuchtdioden über die in der Leiterplatte integrierten Anschlußmittel einzeln oder in Bündeln elektrisch gezielt ansteuerbar sind. In einer für verschiedene Anwendungsmöglichkeiten besonders günstigen Fortbildung der Erfindung ist die Belagplatte mit einer Markierung/Information versehen, die sich vorzugsweise auf einem leicht von der Belagplatte entfernbaren Material, beispielsweise einer selbstklebenden Folie, befindet und insbesondere Informationen über die unterhalb der Belagplatte befindlichen oder zu befestigende Leiterplatte, vorzugsweise den damit verbundenen Leitungen für elektrischen Strom und/oder Lichtleitern vermittelbar macht. Dadurch wird beispielsweise für den Verleger des Lichtsystems oder für gegebenenfalls zeitlich nach der Verlegung vorgesehene Änderungen des Lichtsystems, beispielsweise durch Einfügungen von Aussparungen zum Zugriff und/oder zur Freilegung von unterhalb der Belagplatte befindlichen Licht- oder Elektroleitern auf einfache Weise ermöglicht.
In einer besonders geeigneten Weiterbildung der Erfindung ist die Aussparung oberhalb der Leiterplatte / in der Belagplatte mit einem Lichtelement versehen, daß über die Licht- und/oder Elektroleiter mit der Leiterplatte in Verbindung steht. Die Aussparung kann dabei beispielsweise als eine Fassung gebildet sein, die lichtdurchlässiges Material umschließt, wobei in dem lichtdurchlässigen Material, das beispielsweise aus Glas und/oder einem Kunststoff bestehen kann, optische Elemente, z.B. Linsen, Prismen, Spiegel, refelktierende Folle(n) und/oder elektrische Leuchtkörper bzw. verstärker, integriert sein können, bzw. diese das lichtdurchlässige Material bilden. Dieser Aspekt der Erfindung ermöglicht es auf besonders einfache Weise, die Erfindung an die verschiedensten Bedürfnisse und gewünschten optischen Eindrücke anzupassen.

In einer weiteren günstigen Fortbildung der Erfindung ist die Belagplatte mit mehr als einer Leiterplatte versehen. Dies hat die vorteilhafte Eigenschaft, daß mindestens zwei unterschiedliche Signale gleichzeitig an das Lichtsystem oder Teilen des Lichtsystems von zu mindestens einer Belagplatte vermittelbar bzw. von diesem in Strahlung umsetzbar sind und/oder eine einfache Ansteuerung und/oder Verkabelung auch von komplizierteren Lichtsystemen ermöglicht wird.

In einer anderen vorteilhaften Weiterbildung der Erfindung ist zumindest eine Leiterplatte mit wenigstens einer Haft- und/oder Schutzschicht versehen. Dies hat den Vorteil, daß es beispielsweise eine einfache Fixierung der Leifierplatte an die Belagplatte ermöglicht. Die Schicht kann dabei beispielsweise auf einer vorzugsweise besandeten (Ober- bzw. Unter-)FlächelSeite der-Leiterplatte als eine klebbare Struktur, insbesondere für Bau-/Fliesenkleber, Silikon-/Kunststoffkleber, Mörtelbett gebildet sein: Darüber hinaus kann die Schicht die Leiterplatte auch gegen Lösungsmittel, insbesondere Wasser und/oder gelöste chemische Substanzen- und/oder andere äußere Einflüsse schützen, beispielsweise wenn die Schicht Silikon enthält oder vollständig aus Silikon gebildet ist, so daß eine lange Lebensdauer der Leiterplatte gewährleistet wird. Vorteilhafterweise kann dabei die Schutzschicht (unbesandete Seite) auch mit einer abziehbaren Folie bedeckt sein, um ein einfaches Fixieren unterhalb der Belagplatte zu ermöglichen, so dass eine einfache Herstellung oder Montage des Lichtsystems/Leiterplatte(n) ermöglicht werden kann, insbesondere wenn die Folie zeitlich kurz vor der Befestigung der Leiterplatte an der vorzugsweise unbesandeten Fläche der Leiterplatte entfernt wird. Ist mehr als eine Seite der Leiterplatte mit einer Haft- und/oder Schutzschicht versehen, kann darüber hinaus auch eine besonders einfache Befestigung des erfindungsgemäßen Lichtsystems, beispielsweise in einem Haft- oder Klebebett, erzielt werden.

In einer anderen günstigen Fortbildung ist wenigstens eine Belagplatte mit mindestens einem Niveauausgleich versehen, der der Höhe wenigstens einer Leiterplatte entspricht. Der Niveauausgleich kann dabei als Werkstoff wie z. B. Keramik gebildet sein, der einseitig mit einer Klebeschicht versehen ist, die durch abziehen einer Klebefolie klebebereit ist und auf die Unterseite der Belagplatte geklebt werden kann. Die Ausformungen des Werkstoffs können dabei beliebig sein, geeignet sind u.a. Ringe, Zylinder oder Quader. Möglich ist auch ein Niveauausgleich, der als eine räumliche, z.B. gefräste, Aussparung in der Belagplatte gebildet ist, in die die Leiterplatte eingelassen wird bzw. ist. Ist der Niveauausgleich als Aussparung in der Belagplatte zur Aufnahme einer Leiterplatte gebildet, sind insbesondere auch ebene Flächen der Aussparung von Vorteil, da sie eine besonders einfache Befestigung der Leiterplatte, bspw. mit der klebbaren Fläche (Folie) der Leiterplatte und/oder mit Kleber / Baustoffkleber ermöglichen.

Eine andere Ausgestaltung der Erfindung betrifft ein Lichtsystem das aus mindestens zwei Belagplatten besteht, die durch Fugenmaterial miteinander verbunden sind. Dieses Lichtsystem hat den Vorteil, daß es eine besonders einfache schlüssige Verbindung zwischen den mindestens zwei Belagplatten ermöglicht, wobei es insbesondere vorteilhaft sein kann, evt. nötige Anschlußkabel innerhalb des Fugenmaterials zu führen, da dies eine besonders einfache und definierte Befestigung oder Verschalung der Anschlußkabel im Fugenmaterial ermöglicht.

Typisch sind beispielsweise folgende drei Ausführungsformen der Erfindung:
a) Über einen Lichtdimmer, der als per Hand bedienbare Impulsbreitensteuerung/Lichtsteuerung gebildet ist, steht die Leiterplatte mit einer elektrischen Spannungsversorgung in Verbindung, so dass der Leuchtkörper (z.B. LED) in einer Farbe mit verschiedenen Helligkeiten leuchten kann.
b) Über einen Lichtdimmer, der als per Hand bedienbare Farbsteuerung/Lichtsteuerung gebildet ist, steht die Leiterplatte mit einer elektrischen Spannungsversorgung in Verbindung, so dass der (z.B. RGB-) Leuchtkörper prinzipiell in allen Farben und Helligkeiten steuerbar/einstellbar ist.
c) Über eine Lichtsteuerung steht die Leiterplatte mit einem PC (Personal Computer) oder einem Laptop bzw. Notebook in Verbindung, so dass der (z.B, RGB-) Leuchtkörper, ggf. über ein Lichtsteuerungsprogramm, in allen Farben, allen Helligkeiten und adressierbar steuerbar/einstellbar ist, bspw. ein (Licht-) Filmablauf oder Lichtsequenzen regelbar sind.

Über das dabei verwendete Steuerungsteil zur Lichtsteuerung, in dem insbesondere auch die Stromversorgung bei 220 V integriert ist, lassen sich insbesondere bis zu 512 verschiedene Drähte/Fugenlinien ansteuern, wobei über jeden Draht/Fugenlinie wiederum 512 unterschiedliche Leuchtkörper steuerbar sind.
Aber auch andere Steuerungsteile zur Lichtsteuerung sind geeignet, über die mehr als 512 verschiedene Drähte/Fugenlinien ansteuerbar sind bzw. über jeden Draht/Fugenlinie mehr als 512 unterschiedliche Leuchtkörper steuerbar sind.

Vorteilhaft an der Erfindung ist insbesondere die technische Möglichkeit der Austauschbarkeit der Leuchtkörper/Leuchtmittel (z.B. LED) , z. B. kann nach Defekten eine besonders geeignete Variante der Leiterplatte die Möglichkeit der Austauschbarkeit beinhalten, insbesondere bei Verwendung geeigneter Verbindungseinrichtungen, z.B. Steckfassungen.

Besonders geeignet ist für die Erfindung aber insbesondere, wenn die Kabel fest an der Leiterplatten, angelötet sind. Diese Kabel können in der Fuge oder unter der Belagplatten durch geeignete Verbindungen, wie z. B. Löten, Pressen, Schneidklemmen, Punktschweißen, elektrisch miteinander verbunden sein. Geeignet ist auch die Variante, dass mehrere Leiterplatten miteinander durch feste Kabellängen elektrisch verbunden sind (konfektionierte Variante). Dann entfallen sogar die oben genannten elektrischen Verbindungen

Ein besonderer Vorteil der Erfindung ist, dass keine der Zentralbox (= Steuerung bzw. Steuerungsteil) nachgeschaltete(n) Hilfsbox(en) oder ähnliche Vorrichtungen notwendig sind. Die elektrische Ansteuerung der Leiterplatte(n) erfolgt stattdessen direkt von einer (oder ggf. mehreren) Zentralbox(en), bei Zentralbox(en) im Echtzeitbetrieb als gemeinsame Zeitbasis.

Im Ansteuersystem ist es bevorzugt die einfache Variante:
- manuell einstellbare Zentralbox(en) (für einfache Ansprüche) oder
- PC gesteuerte Zentralbox(en) geben (für gehobene Ansprüche) sein.

Besonders vorteilhaft ist die Erfindung aber auch auch, wenn lediglich ein Leuchtkörper pro Belagplatte verwendet/angesteuert wird.

Erfindungsgemäß kann der bzw. die Leuchtkörper in den unterschiedlichsten Ausgestaltungen gebildet oder sicht bar sein, bspw. durch eine Maske,.Aufsatz, Auslassung, Ausfräsung bzw. Aussparung, z.B. im Fugenmaterial oder im Material der Belagplatte, usw. in den unterschiedlichsten Ausgestaltungen erscheinen bzw. sichtbar sein, z.B. als Stern, Herz, Piktogramm usw.

Im Vergleich zum Stand der Technik schließt erfidungsgemäß die Leiterplatte insbesondere nicht am Rand der Fliese/Belagplatte ab, sondern ragt über den Rand der Fliese/ Belagplatte hinaus, insbesondere wenn der/die Leuchtpunkt(e)/Leuchtkörper im Fugenbereich von der Leiterplatte getragen werden, so dass eine besonders einfache Umsetzung und Handhabung der Erfindung ermöglicht wird.

Insbesondere die Kabelführung(en) der Anschlusskabel im Bereich der Fuge(en) ist dabei von besonderem Vorteil.

Als elektronische Steuerung der Leuchtkörper ist für die unterscheidlichsten Anforderungen erfindungsgemäß insbesondere eine Bussystem-Ansteuerung geeignet.

Ein anderer Aspekt der Erfindung betrifft einen Bausatz zur Herstellung des erfindungsgemäßen Lichtsystems, der wenigstens eine Leiterplatte und/oder einen Leuchtkörper sowie, nach Bedarf, Zusatzelemente (Netzteile, Kabel/Leitungen und Steuerelemente) enthält. Günstig ist insbeosndere auch eine im Bausatz beinhaltetete vormontierte zusammenhängende Fläche / Netz / Gewebe / Kleber, auf der bzw. dem sich bereits mehrere Belagplatten befinden. Vorteilhaft ist insbesondere auch, wenn die Belagplatte und/der Leiterplatte und/oder Leuchtkörper durch eine oder mehrere der oben beschriebenen Merkmale modifiziert ist/sind, wodurch die entsprechenden erfindungsgemäßen Vorteile realisiert werden können. Der erfindungsgemäße Bausatz ermöglicht nun eine besondere einfache Montage und Verwendung des neuen Lichtsystems, insbesondere wenn er paßgerechte Teile und/oder eine Beschreibung bzw. Anleitung enthält. Vorteilhafterweise kann der Bausatz auch so ausgestaltet sein, daß die Bestandteile, insbesondere die Belagplatte und/oder Leiterplatte, und/oder der Leuchtkörper vormontiert sind, zum Beispiel wenn die Leiterplatte bereits an der Belagplatte fixiert ist und/oder wenn die Anschlussmittel/-kabel des Leuchtkörpers bereits an den vorgesehenen Kontakten befestigt sind. Möglich ist dementsprechend auch ein Bausatz, bei dem die Belagplatte und/oder Leiterplatte und/oder Leuchtkörper und/oder Anschlußmittel mit einer abziehbaren Folie überzogen sind, wodurch für den Monteur des Lichtsystems mit einem kurzem Handgriff, dem Abziehen der Folie, eine besonders einfache Montage des Lichtsystems ermöglicht wird, insbesondere auch durch eine Zusatzschicht, die auf Bauklebern/Baustoffen ausreichend gut haftet. Vorteilhaft ist in diesem Zusammehang eine besandete/strukturierte Zusatzschicht, um ein gutes Kleben im (Fliesen-)Klebebett zu gewährleisten.

Ein weiterer Aspekt der Erfindung betrifft ein Verfahren zur Verlegung eines erfindungsgemäßen Lichtsystems, bei dem eine Oberfläche, beispielsweise ein Boden/Weg oder eine Fassade/Wand, mit wenigstens einer Belagplatte belegt wird, an deren Unterseite mindestens eine Leiterplatte derart fixiert wird bzw. ist, daß die Leiterplatte über den Rand/Naht/Kante der Belagplatte übersteht, und daß die Leiterplatte mit wenigstens einem Leuchtkörper verbunden wird bzw. ist. Dieses erfindungsgemäße Verfahren hat den Vorteil, daß es auf einfachste Weise, die Realisierung des erfindungsgemäßen Lichtsystems ermöglicht. Darüber hinaus kann es für die Verlegung und/oder Installation auch von Vorteil sein, wenn wenigstens ein Bauteil gemäß den oben geschilderten Maßnahmen modifiziert ist und/oder die Bauteile in einem Bausatz zusammengefaßt find.

Bei der Installation des Lichtsystems kann als besonders günstige Fortbildung wenigstens ein Leuchtkörper an einen elektrischen Stromkreis angeschlossen werden. Dies hat den Vorteil, daß den Leuchtkörpern auf einfachste Weise elektrische Energie zuführbar wird, die beispielsweise von einer externen Stromquelle gespeist wird.

Vorteilhaft kann auch insbesondere eine Verwendung des erfindungsgemäßen Lichtsystems sein, indem wenigstens ein Leuchtkörper mit elektrischer Energie gespeist wird. Dadurch wird es auf besonders einfache Weise ermöglicht, daß der wenigstens eine Leuchtkörper elektrische Energie u.a. in optische Strahlung umwandeln kann, aber auch eine externe Steuerung der sichtbaren optischen Strahlung wird möglich, indem dem Leuchtkörper oder seinem(/n) Steuerelement(en) nicht dauerhaft elektrische Energie zugeführt wird.
Dabei kann es in Weiterbildung der Erfindung besonders günstig sein, wenn die elektrische Energie die dem Lichtsystem bzw. seinen Steuerelementen zugeführt wird, zeitlich gesteuert wird. So wird es zum Beispiel möglich, durch eine zeitliche Taktung des zugeführten Stroms entweder dem Steuerelement Informationen zu übermitteln und/oder das Lichtsystem gewünschte optische Effekte umsetzen zu lassen.
Besonders günstig ist auch eine andere Fortbildung der erfindungsgemäßen Verwendung des Lichtsystems, indem der wenigstens eine Leuchtkörper elektrische. Information, mit der er oder sein(e) Steuerelement(e) gespeist wird, in Licht überträgt. Dies hat den Vorteil, daß dadurch die gewünschten optischen Effekte des erfindungsgemäßen Lichtsystems erreicht werden, je nachdem mit welcher elektrischen Information, die im Prinzip beliebig beschaffen sein kann und nach den Erfordernissen anpassbar ist, der Leuchtkörper bzw. sein(e) Steuerelement(e) gespeist wird. Dadurch ist es beispielsweise möglich, daß die optische Strahlung des Leuchtkörpers in ihrer Helligkeit und Farbe zeitlich variiert wird.

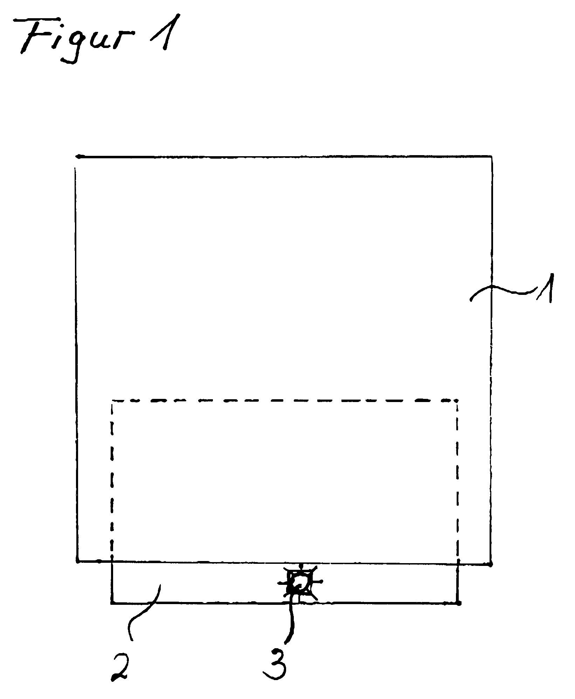

Ein Beispiel für das erfindungsgemäße Lichtsystem wird in Abbildung 1 gegeben, die eine Belagplatte (1) zeigt, an der eine Leiterplatte (2) fixiert ist und welche einen Leuchtkörper (3) trägt.

Ein typisches Beispiel für die Herstellung und Installation des erfindungsgemäßen Lichtsystems wird nachfolgend gegeben.
Es wird mindestens eine Leiterplatte unterhalb einer Fliese (keramisches Element/Bauelement) aufgeklebt: Auf der Leiterplatte befindet sich eine Klebefläche (zum Aufkleben der Leiterplatte an die Fliese), die mit einer Schutzfolie bzw. einem Schutzpapier bedeckt ist und durch Abziehen der Folie bzw. des Papiers freigelegt wird, so daß die Leiterplatte klebebereit wird/ist. Auf der Leiterplatte befinden sich außerdem Anschläge, die ein genaues masshaltiges und schnelles Positionieren und Aufkleben gestatten. Es wird ein 2-Draht-Bussystem verwendet, dessen zwei an der Leiterplatte ankommende und zwei abgehende Kabel in mindestens einem Kabel-/Draht-Ring zusammengefaßt (z.B. gerollt) sind und auf der Oberseite eines Klebestreifens/-Strips befestigt ist. Der Klebestreifen/-Strip verfügt über wenigstens eine klebende Seite/Bereich, die durch Abziehen einer darauf befindlichen Schutzfolie/-papier freigelegt und klebend auf der Fliese fixiert ist/wird und den weiteren Bauablauf des Fliesenverlegens nicht oder zumindestens nur minimal behindert.

Nach dem Verlegen der Fliese werden die an der Leiterplatte ankommenden und die abgehenden Kabel des Bussystems von der Fliesenoberfläche gelöst und in der Fuge durch eine geeignete elektrische Verbindungsart verbunden, wobei die elektrische(n) Verbindung(en) durch eine Schutzschicht gegen Feuchtigkeit und/oder alkalische Einwirkungen (insbesondere durch den Baustoff- oder Baukleber) geschützt wird/ist.
Nachdem die Kabel in die Fugen zwischen den Fliesen (keramische Elemente/Bauelemente) verbracht sind, wenn erforderlich auch mit einem federnden Klemmmaterial, kann problemlos mit Fugenmaterial verfugt werden.
Zusätzlich kann nach dem Verlegen/Kleben der Fliesen die Fliesenfuge (Fuge zwischen den keramischen Elementen/Bauelementen) vom Baukleber/Verlegematerial mit einem Spatel entsprechend der Fugenbreite und -tiefe freigezogen werden, solange das Klebe-Nerarbeitungsmaterial noch nicht ausgehärtet ist.
Dies kann notwendig werden, insbesondere bei größeren Flächen, um entsprechend ausreichende Kabelquerschnitte zu verlegen.

Die nachfolgend gegebenen Zeichnungen zeigen Ausführungsbeispiele des zuvor beschriebenen erfindungsgemäßen Lichtsystems. Dabei zeigt
Figur 1 ein Lichtsystem mit Belagplatte (1), Leiterplatte (2) und Leuchtkörper (3).

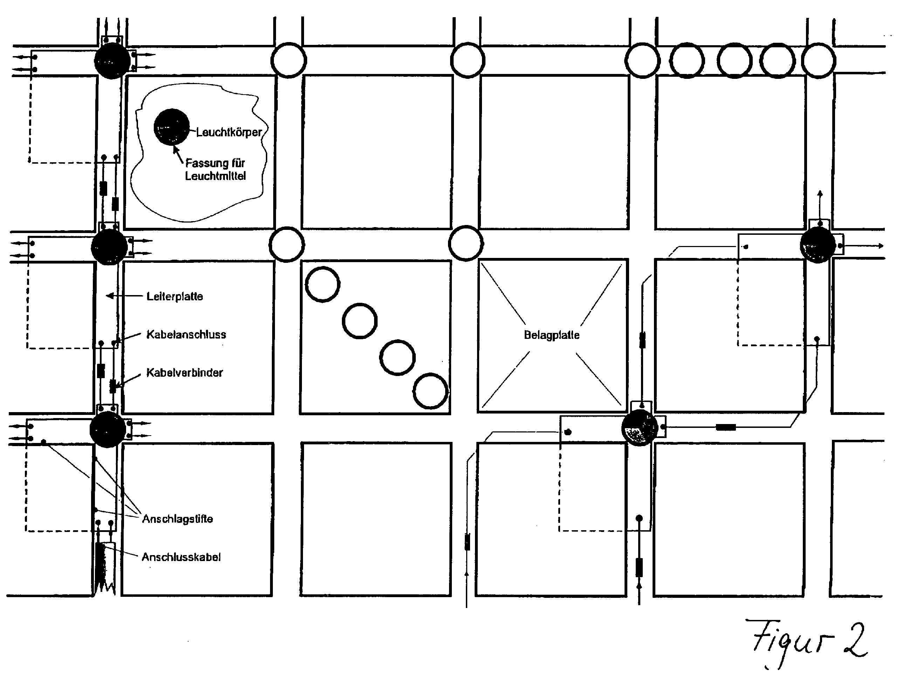

Figur 2 eine typische Anordnug eines verlegten/verbauten Lichtsystems mit Bussanschlüssen. Kreise mit dreigeteilten Flächen repräsentieren RGB-Leuchtmittel, Pfeile stellen Anschlußmittel bzw. Kabel (zwei- oder mehradrig) dar.

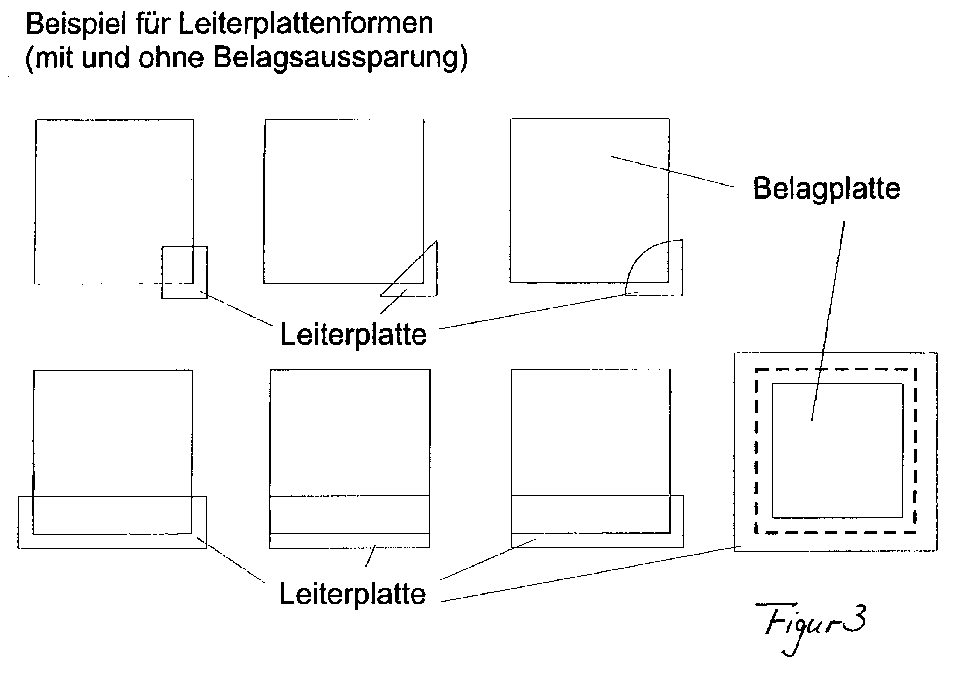

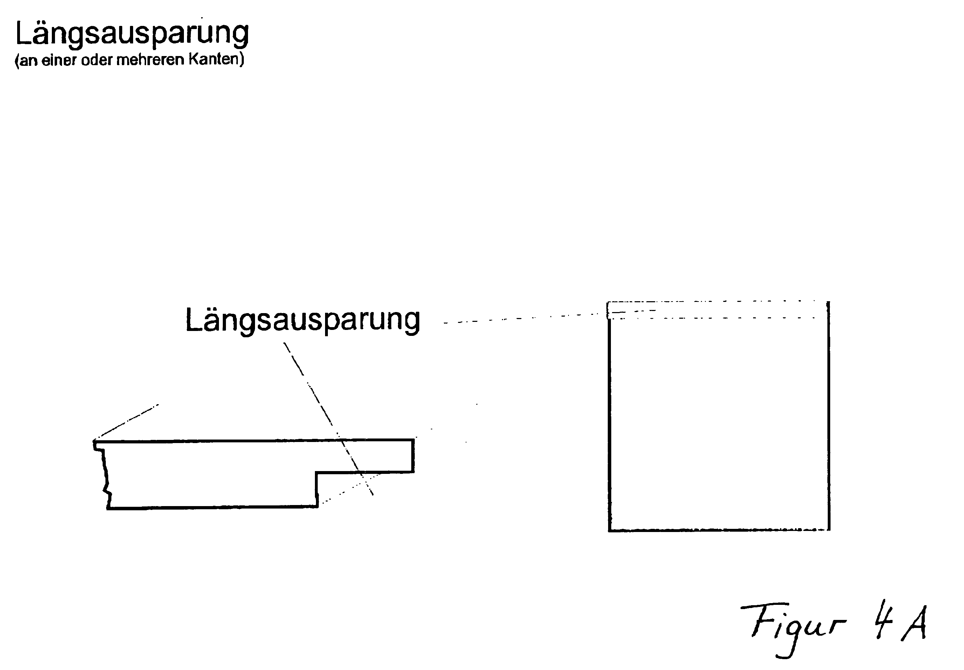

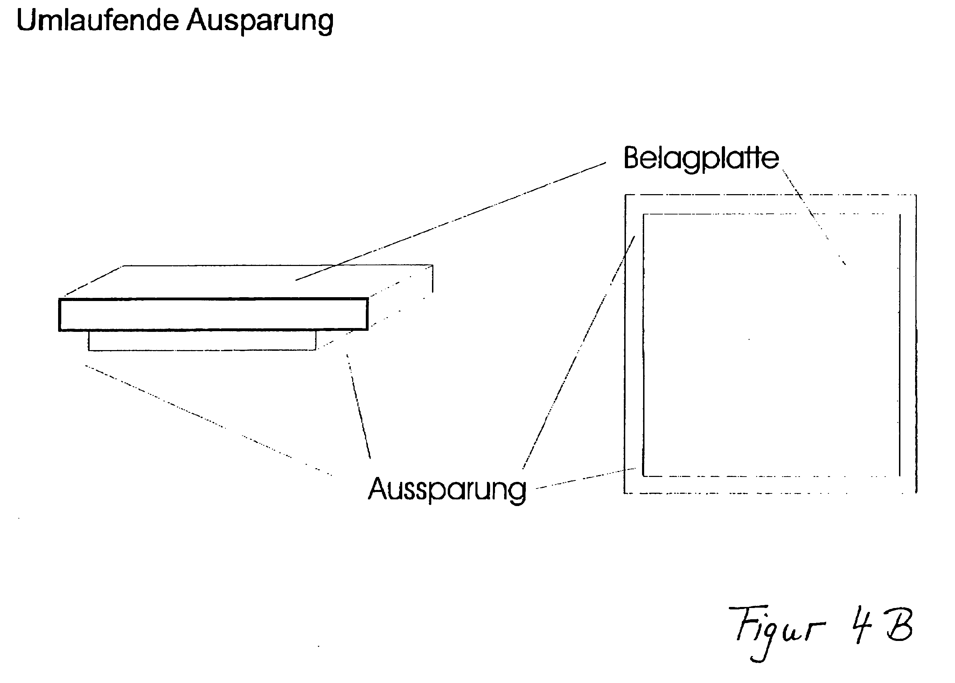

Figur 3 verschiedene Arten von möglichen Leiterplattenformen, die als überlappende Flächen auf den quadratisch gezeichneten Belagplatten dargestellt sind. Die gezeigten Leiterplatten können voll oder zumindest teilweise in Aussparungen gelagert sein. Details entsprechender Aussparung können zur Verdeutlichung aus den Figuren 4 A und 4 B entnommen werden.
Figur 4 A und Figur 4 B Detailzeichnungen (Aufblick und Seitenansicht) einer Längs-(Figur 4 A) und einer umlaufenden (Figur 4 B) Aussparung, die zur Fixierung/Lagerung von Leiterplatten geeignet sind.

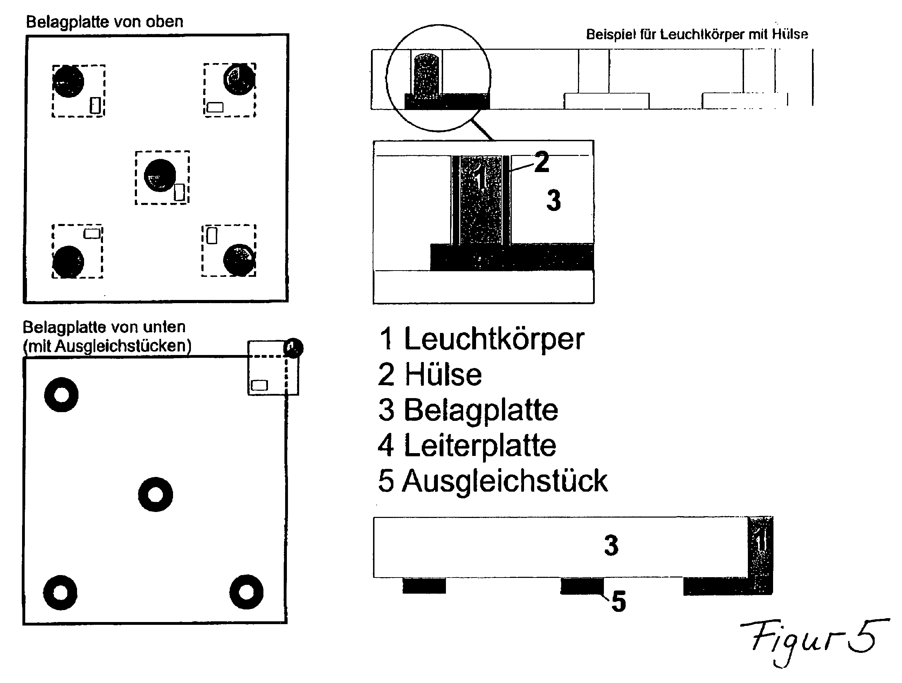

Figur 5 verschiedene Ansichten bzw. Ausschnitte .von zwei Lichtsystemen. In der oberen Hälfte der Figur 5 wird ein Lichtsystem gezeigt, bei dem von oben sichtbare RGB-Leuchtkörper in Aussparungen (in der sich eine Hülse zur Aufnahme des Leuchtkörpers befinden kann) gelagert sind, die innerhalb der Belagplatte gebildet sind, wobei die Leuchtkörper jeweils mit einer Leiterplatte in Verbindung stehen, die an der Unterseite der Belagplatte fixiert ist. In der unteren Hälfte der Figur 5 ist ein Lichtsystem dargestellt, bei dem ein Leuchtkörper mit Hilfe einer die Belagplatte überlappenden Leiterplatte an der Ecke (z.B. im Fugenkreuz) einer Belagplatte angeschlossen/gelagert ist.
   In dem oben dargestellten Lichtsystem in Figur 5 erfolgt der Niveausausgleich bezüglich der fixierten Leiterplatte(n) jeweils durch Aussparungen in der Leiterplatte, in dem unten dargestellten Lichtsystem durch rund gebildete Ausgleichsstücke, die sich auf der Unterseite der Belagplatte befinden.

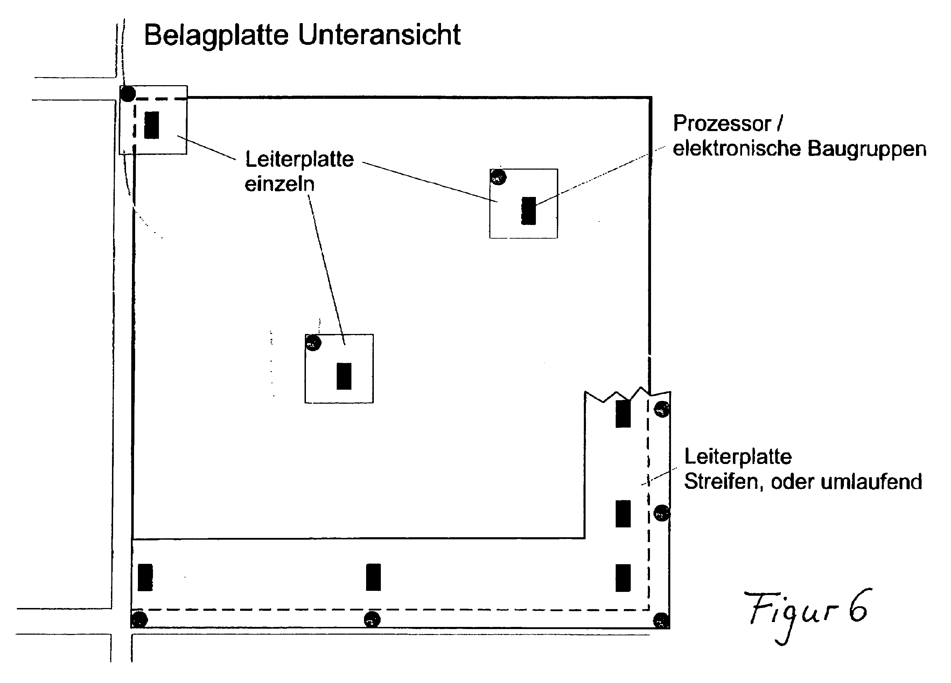

Figur 6 beispielhaft die Verkabelung eines erfindungsgemäßen Lichtsystems mit Hilfe von Klebestreifen (repräsentiert durch schwarzflächige Rechtecke), die die Leiterplatten an der Unterseite der Belagplatte fixieren. Belagplatte, RGB-Leuchtmittel und Leiterplatte sind entsprechend den vorangehenden Figuren dargestellt. Die Leiterplatten sind dabei durch Anschlußmittel bzw. Kabel (ein- oder mehradrig) verbunden, die als Schlangenlinien gezeichnet sind. Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Lichtsystem mit mindestens einer, vorzugsweise nicht elektrisch leitenden, Belagplatte, die ggf. durchsichtig oder teilweise durchsichtig ist, und mindestens einem Leuchtkörper, **dadurch gekennzeichnet, dass** am Boden der Belagplatte zumindestens eine Leiterplatte, die ggf. mit mindestens einer Haft- und/oder Schutzschicht versehen ist, fixiert ist und den mindestens einen Leuchtkörper trägt, der vorzugsweise als eine oder mehrere Leuchtdioden gebildet ist, und die zumindestens eine fixierte Leiterplatte, die ggf. mit einem Steuerelement verbunden ist, seitlich über den Rand (Kante, Seitenfläche) der Belagplatte vorsteht und/oder bündig mit dem Rand (Kante, Seitenfläche) der Belagplatte abschließt, und ggf. eine Aussparung, vorzugsweise als Bohrung, in der Belagplatte oberhalb der Leiterplatte gebildet ist, wobei der mindestens eine Leuchtkörper von dem Bereich der Leiterplatte unterhalb der Aussparung/Bohrung der Belagplatte und/oder dem vorstehenden Bereich der Leiterplatte getragen wird.

2. Lichtsystem nach Anspruch 1 **dadurch gekennzeichnet, dass** an dem vorstehenden Bereich und/oder dem Bereich der Leiterplatte unterhalb der Aussparung/Bohrung der Belagplatte wenigstens ein Leuchtkörper und/oder Anschlusskabel zum Anschluß von elektrischen Leitungen vorgesehen sind und ggf wenigstens ein Leuchtkörper an ein elektrisches Bussystem angeschlossen ist.

3. Lichtsystem nach einem der vorangehenden Ansprüche, **dadurch gekennzeichnet, dass** die Belagplatte als Kachel oder Fliese ausgestaltet ist und der Randbereich der Leiterplatte mit einer Breite von der Kachel oder Fliese hervorsteht, die der üblichen Breite der Fugen zwischen Kacheln oder Fliesen entspricht und ggf. wenigstens eine elektrische Leitung entlang der Fugen zwischen zwei Belagplatten geführt ist.

4. Lichtsystem nach einem der vorangehenden Ansprüche, **dadurch gekennzeichnet, dass** die Leiterplatte auf der dem Boden der Belagplatte zugewandten Seite mit mindestens einem Lichtleiter versehen ist, der vorzugsweise vom dem Leuchtkörper gespeist wird.

5. Lichtsystem nach einem der vorangehenden Ansprüche, **dadurch gekennzeichnet, dass** die dem Betrachter nach der Montage zugewandte Seite der Belagplatte oberhalb der Leiterplatte mit wenigstens einer entfernbaren Markierunghnformation versehen ist.

6. Lichtsystem nach einem der vorangehenden Ansprüche, **dadurch gekennzeichnet, daß** wenigstens eine Belagplatte mit mindestens einem Niveauausgleich versehen ist, der der Höhe der wenigstens einer Leiterplatte entspricht.

7. Lichtsystem nach einem der vorangehenden Ansprüche, **dadurch gekennzeichnet, daß** mindestens zwei Belagplatten/-segmente durch Fugenmaterial miteinander verbunden sind.

8. Bausatz zur Herstellung eines Lichtsystems nach einem der vorangehenden Ansprüche, **dadurch gekennzeichnet, daß** er wenigstens eine Leiterplatte und einen Leuchtkörper, sowie eine Stromversorgung, elektrische Leitungen/Kabel, Kabelverbinder mit Schutzhülle und eine Steuerelement/gerät nach Bedarf enthält und ggf. eine oder mehrere Belagplatten.

9. Verfahren zur Verlegung eines Lichtsystems nach den Ansprüchen 1 bis 7, **dadurch gekennzeichnet, daß** eine Oberfläche mit wenigstens einer Belagplatte belegt wird, an deren Unterseite mindestens eine Leiterplatte derart fixiert wird bzw, ist, daß die Leiterplatte über den Rand/Naht/Kante der Belagplatte übersteht und/oder bündig mit dem Rand/Naht/Kante der Belagplatte abschließt, und/oder sich unter der Belagplatte befindet und nicht mit dem Rand/Naht/Kante abschließt und daß die Leiterplatte mit wenigstens einem Leuchtkörper verbunden wird bzw. diesen trägt und ggf. der wenigstens eine Leuchtkörper an einen elektrischen Stromkreis angeschlossen wird.

10. Verwendung eines Lichtsystems nach einem der Ansprüche 1 bis 7, **dadurch gekennzeichnet, daß** wenigstens ein Leuchtkörper mit elektrischer Energie gespeist wird, wobei die elektrische Energie ggf. gesteuert wird und/oder elektrische Informationen in den Energieleitungen zu der Leiterplatte und/oder dem Leuchtkörper übertragen werden, vorzugsweise durch ein BUS-System, so dass wenigstens ein Leuchtkörper elektrische Information in Licht überträgt, wobei ggf. die Lichtstärke und/oder Lichtfarbe verändert wird.
